# EUROPÄISCHE PATENTSCHRIFT

(11) **EP 2 410 354 B1**
(45) Veröffentlichungstag und Bekanntmachung des Hinweises auf die Patenterteilung: **18.12.2013**
(21) Anmeldenummer: 10170657.0
(22) Anmeldetag: 23.07.2010
(51) Int. Cl.: G01V 8/20

(54) **Verfahren zum Betreiben eines Sicherheitslichtgitters und Sicherheitslichtgitter**
Method for operating a safety light grid and safety light grid
Procédé de fonctionnement d'une barrière lumineuse de sécurité et barrière lumineuse de sécurité

(43) Veröffentlichungstag der Anmeldung: 25.01.2012
(73) Patentinhaber: SICK AG, 79183 Waldkirch (DE)
(72) Erfinder: Klingelhöfer, Christian, 79110 Freiburg (DE); Eisele, Florian, 79108 Freiburg (DE)
(74) Vertreter: Ludewigt, Christoph

(56) Entgegenhaltungen:
- EP-A1- 1 785 745
- EP-A1- 2 230 538
- GB-A- 2 423 241
- US-A1- 2005 052 639

## Beschreibung

Die Erfindung betrifft ein Verfahren zum Betreiben eines Sicherheitslichtgitters zur Überwachung eines Schutzfeldes gemäß dem Oberbegriff des Anspruchs 1 sowie ein entsprechendes Sicherheitslichtgitter.

Derartige Lichtgitter für die Sicherheitstechnik dienen beispielsweise zur Absicherung von gefahrbringenden Maschinen, wie Gesenkbiegepressen, Stanzmaschinen, Schneidwerkzeugen, Schweißrobotern und dergleichen. Das Sicherheitslichtgitter schützt dabei vor unzulässigem Eindringen in Gefahrenbereiche, indem das durch das Lichtgitter aufgespannte Schutzfeld auf Verletzung durch ein Objekt überwacht wird. Wird das Schutzfeld verletzt, gibt das Sicherheitslichtgitter ein entsprechendes Sicherheitssignal aus, das z. B. ein Abschaltsignal für die gefahrbringende Maschine sein kann. Derartige Lichtgitter als Sicherheitssensoren müssen zuverlässig arbeiten und deshalb hohe Sicherheitsanforderungen erfüllen, beispielsweise die Gerätenorm EN61496 für berührungslos wirkende Schutzeinrichtungen (BWS) und in der Applikation die Norm EN13849 für Maschinensicherheit.

Die Lichtgitter bestehen in der Regel aus zwei optischen Einheiten, wobei in der einen optischen Einheit eine Reihe Lichtsender und in der anderen optischen Einheit eine entsprechende Reihe Lichtempfänger angeordnet ist, so dass einzelne Sender und Empfänger sich paarweise gegenüberliegen und zwischen sich das Schutzfeld des Lichtgitters bilden. Bei Unterbrechung wenigstens eines Lichtstrahls, was durch einen Lichtempfänger detektiert wird, erfolgt die Ausgabe des Sicherheitsschaltsignals. Das Ausbleiben des Lichtempfangs wird in der Regel dadurch erkannt, dass in der Empfängerelektronik ein Schwellwert definiert ist, der bei freiem Schutzfeld überschritten wird und bei Unterbrechung des Lichtstrahls nicht überschritten wird. Üblicherweise wird das Empfangssignal in der Empfängerelektronik hoch verstärkt und dann in einer Auswerteeinheit gegen den Schwellwert verglichen. Die Dynamik der empfangenen Lichtenergie ist in der Regel sehr hoch. Dieses ist bereits dadurch bedingt, dass die optischen Einheiten des Lichtgitters für unterschiedliche Abstände geeignet sein müssen, wobei aufgrund der Divergenz der Sendelichtstrahlen die Intensität des Sendelichts am Ort des Empfängers abhängig vom Abstand sehr unterschiedlich ist. Die ausgesandte Lichtintensität eines Lichtsenders ist umgekehrt proportional zum Quadrat des Abstands. Wenn die Empfängereinheit beispielsweise sehr weit von der Lichtsendeeinheit entfernt ist, ist die empfangene Lichtmenge an einem Empfänger relativ gering und muss entsprechend verstärkt werden. Dasselbe Lichtgitter soll aber auch für geringe Abstände geeignet sein, wobei dann die gleiche Verstärkung dazu führt, dass die Empfangselektronik bei freiem Schutzfeld in der Sättigung ist.

Somit ist es üblich, dass die Schaltschwellen in der Nähe der Detektionsgrenze liegt. Das bei freiem Schutzfeld erhaltene Signal liegt aber in sehr vielen Anwendungen weit über der Sättigungsgrenze der Empfängerelektronik. Dies führt zu Verzerrungen des Signalverlaufs und Übersteuerungen der Verstärker der Empfangselektronik und damit zu einer nicht optimalen Signalauswertung.

Davon ausgehend liegt der Erfindung die Aufgabe zugrunde, ein Verfahren zum Betreiben eines Lichtgitters und ein entsprechendes Lichtgitter bereitzustellen, mit dem die vorgenannten Nachteile vermieden werden können.

Diese Aufgabe wird vorrichtungsgemäß gelöst durch ein Verfahren mit den Merkmalen des Anspruchs 1 und ein Lichtgitter mit den Merkmalen des Anspruchs 8.

Das erfindungsgemäße Verfahren zum Betreiben eines Sicherheitslichtgitters umfasst die Schritte:
- Aussenden von Lichtstrahlen von Lichtsendern einer ersten und/oder zweiten optischen Einheit,
- Empfangen der Lichtstrahlen mit Lichtempfängern der zweiten und/oder ersten optischen Einheit und Erzeugen von Empfangssignalen, wobei jeweils ein Lichtsender einem Lichtempfänger gegenüberliegend zugeordnet ist, so dass die Lichtstrahlen solch gebildeter Paare von Lichtsendern und Lichtempfängern ein Schutzfeld bilden,
- Auswerten der Empfangssignale der Lichtempfänger,
- Erzeugen eines Sicherheitssignals bei unzulässigem Objekteingriff in das Schutzfeld,
- Ansteuern der Lichtsender und/oder Verstärken der Empfangssignale der Lichtempfänger, so dass alle verstärkten Empfangssignale bei freiem Schutzfeld im nicht gesättigten Bereich der Empfangselektronik liegen,
- Auswerten der Amplituden aller verstärkten Empfangssignale
- und Ausgeben des Sicherheitssignals, wenn durch einen unzulässigen Objekteingriff wenigstens eine der Amplituden in einem bestimmten Bereich liegt
- Ermitteln der Größe und des Ortes eines Objektes durch Bewertung und Vergleich der Intensitäten zweier Strahlen, die den Rand des im Schutzfeld befindlichen Objektes streifen.

In dieser erfindungsgemäßen Ausgestaltung des Verfahrens zum Betreiben eines Lichtgitters ist sichergestellt, dass entweder durch Einstellen der Sendeleistung und/oder der Empfängerempfindlichkeit, also der Verstärkung der Empfangssignale, die Empfangselektronik immer im nicht gesättigten Bereich, beispielsweise im linearen, betrieben wird. Damit kann die Amplitude der Empfangssignale - und nicht wie im Stand der Technik nur das einfache Überschreiten eines Schwellwertes - ausgewertet werden.

Durch die Auswertung der Amplituden der Empfangssignale eines oder mehrerer der Lichtstrahlen und womöglich deren gegenseitiger Verrechnung kann auf eine Vielzahl von Umweltbedingungen und Lichtgitterzuständen geschlossen werden.

Diese umfassen unter anderem eine Strahlunterbrechung (unzulässiger Objekteingriff), eine Verschmutzung, Dejustage, Umspiegelungen, Degradation, Fremdlicht, Fehlfunktionen und weitere Veränderungen. Bei der Auswertung zur Detektion dieser Eigenschaften und Zustände macht man sich deren typische unterschiedliche zeitliche Verläufe und deren gegenseitige Abhängigkeiten zur Unterscheidung zu nutzen.

So kann die Amplitudenauswertung vorteilhaft für eine Überprüfung der korrekten Funktion der Empfangsseite des Lichtgitters genutzt werden. Dazu wird vorübergehend ein stärkeres oder schwächeres Lichtsignal von den Lichtsendern gesendet und auf der Empfangsseite überprüft, ob die Empfangssignale sich erwartungsgemäß entsprechend der Änderungen des ausgesandten Signals verhalten. Dadurch kann der komplette Übertragungskanal, bestehend aus optischer Wegstrecke und empfangsseitiger Elektronik und Auswertung, inklusive gegebenenfalls enthaltener integrierter Schaltungsbauteile, getestet werden. Diese waren bisher nur mit hohem zusätzlich zu implementierenden Schaltungsaufwand oder gar nicht überprüfbar. Durch solche Überprüfungen kann eine höhere funktionale Sicherheit erreicht werden. Auch kann jede Veränderung der Sendeleistung oder der Empfangsempfindlichkeit sowie die fehlerhafte Aktivierung mehrerer Sender erkannt werden, was bisher nicht möglich war. Durch eine zeitliche Verfolgung der Änderung des Amplitudenwerts der empfangenen Lichtenergie kann eine nachlassende Systemleistung durch z.B. Degradation oder Verschmutzung erkannt werden und eine Korrektur zur Wiederherstellung der Systemleistung vorgenommen werden, beispielsweise durch Erhöhung der Sendeleistung oder Erhöhung der Empfängerempfindlichkeit. Eine Erhöhung der Sendeleistung hat den Vorteil, dass nicht die Reichweite sondern auch der Störabstand wiederhergestellt wird.

Ein weiterer Vorteil der Erfindung liegt darin, dass eine weitere Erhöhung der Sicherheit erreicht werden kann, da Störlichtimpulse von korrekten Sendelichtpulsen sicher unterschieden werden können, denn die Amplitude der Störlichtpulse ist mit sehr hoher Wahrscheinlichkeit verschieden von der Amplitude des korrekten Sendelichtpulses. Damit ist hinreichend unwahrscheinlich, dass ein fehlender korrekter Sendelichtpuls durch einen Störlichtimpuls ersetzt wird.

Die Erfindung ermöglicht es, dass alle Lichtsender so eingestellt werden, dass auf jeden Lichtempfänger in etwa die gleiche Lichtintensität auftrifft. Durch Vergleich der Empfangssignale untereinander, kann dann eine Umspiegelung einzelner Strahlen dadurch erkannt werden, dass dort die empfangene Lichtintensität höher ist als bei den Strahlen, bei denen keine Umspiegelung auftrat. Somit kann durch eine einfache Auswertung der Empfangssignale eine Umspiegelung erkannt werden, wodurch die Sicherheit des Sicherheitslichtgitters weiter erhöht ist.

Ein weiterer Vorteil ist, dass durch die erfindungsgemäße Amplitudenauswertung Sättigungseffekte, wie Verzerrungen und Nachschwingen vermieden werden und dadurch eine effektivere Signalauswertung möglich ist. So können zum Beispiel bei Kodierverfahren für die Sendelichtstrahlen, welche Zeitschlitze als Erwartungsfenster für Sendepulse verwenden, die Zeitschlitze optimal kurz gewählt werden. Mittels der Erfindung kann nämlich die zeitliche Position der Sendepulse, also z.B. die zeitliche Position von Pulsflanken oder Nulldurchgängen, sehr genau detektiert werden, da der zeitliche Verlauf der Pulse nicht durch Verzerrungen und Sättigungseffekte gestört ist.

Wenn nicht nur eine Sättigung vermieden wird, sondern auch ein nichtlinearer Betrieb der Empfängerelektronik, ergeben sich weitere Vorteile, wie zum Beispiel die Vermeidung von Intermodulationsfrequenzen bei Kodierverfahren zum Frequenzmultiplex.

Ein weiterer Vorteil der Erfindung ist, dass die Amplitudenauswertung zur Erhöhung der effektiven Auflösung genutzt werden kann. Nach dem Stand der Technik ist zur sicheren Erkennung von Objekten eine vollkommene Abdeckung mindestens eines Strahls gefordert. Um dies zu gewährleisten, wird die geometrische Auflösung eines Lichtgitters aus der Summe des Strahlabstands und des Linsendurchmessers der Sendelinsen bestimmt. Denn nach dieser Bedingung deckt ein Objekt im Schutzfeld mit der Größe der geometrischen Auflösung in jeder Position mindestens eine Linse vollkommen ab. Dies ist sicherheitstechnisch bisher notwendig gewesen, da schon ein kleiner freier Bereich der Linsenfläche genügend Signal im Empfänger erzeugen könnte, um die Schaltschwelle zu überschreiten, denn im Empfänger wurde bisher die Schaltschwelle möglichst niedrig gelegt. Erfindungsgemäß wird nun aber die Amplitude des Empfangssignals ausgewertet, so dass auch eine Teilabdeckung der Linse sicher erkannt werden kann. Damit werden auch Objekte kleiner als die vorgenannte geometrische Auflösung erkannt z.B. ein Objekt mit einer Größe des Strahlabstandes, das in der ungünstigsten Position zwei benachbarte Strahlen jeweils nur zur Hälfte abdeckt. Eine solche hälftige Abdeckung wird mit der Erfindung jedoch detektiert. Somit ist eine Objektgröße, die noch sicher erkannt werden kann, unabhängig vom Sendelinsendurchmesser, im Gegensatz zur vorgenannten geometrischen Auflösung.

Die Erfindung ermöglicht es, die Empfangsempfindlichkeit soweit zu reduzieren, dass bei geringem Abstand zwischen Sender und Empfänger mit maximaler Sendeleistung gearbeitet werden kann, ohne dass die Empfangselektronik gesättigt wird. Um den maximalen Störabstand bei gleichzeitig nicht gesättigtem Betrieb zu gewährleisten, wird bei Verringerung des Abstandes zwischen Sender und Empfänger wie folgt vorgegangen: zunächst wird die Empfängerempfindlichkeit reduziert und erst wenn die Sättigung der Empfangselektronik nicht mehr vermeidbar ist, wird die Sendeleistung reduziert.

In einer Weiterbildung der Erfindung kann die Senderleistung geregelt werden, wohingegen die Empfangssignale mit fest eingestellter Verstärkung der Empfangselektronik verstärkt werden. Alternativ kann auch anders herum die Verstärkung der Empfangselektronik eingestellt werden und die Senderleistung fest eingestellt sein, insbesondere auf maximale Leistung.

Die Einstellungen können dabei in der Endfertigung des Lichtgitters erfolgen, in der das Lichtgitter elektronisch vermessen wird und für jeden Sender ein Kalibrierwert oder für alle Sender ein gemeinsamer Kalibrierwert und/oder jedem Empfänger und/oder alle Empfänger gemeinsam ein Kalibrierwert in einer elektronischen Schaltung im Lichtgitter abgespeichert wird.

Die passenden Einstellungen für die Lichtsenderintensitäten und/oder die entsprechenden Verstärkungen auf der Empfangsseite können in einer Ausführung der Erfindung auch automatisch erfolgen, wenn die Entfernung zwischen den beiden optischen Einheiten des erfindungsgemäßen Lichtgitters automatisch ermittelt werden kann. Eine solche Abstandsermittlung ist beispielsweise beschrieben in der DE 10359782 A1 beschrieben.

Alternativ kann auch ein Kommunikationskanal vorgesehen sein, über den die Senderansteuerung mit der Verstärkungseinstellung der Empfangselektronik kommunizieren kann.

Die Strahlleistung für jeden Lichtsender kann einzeln einstellbar sein.

Um die vorgenannten Auswertungen, beispielsweise zur Ermittlung von Umweltbedingungen oder Lichtgitterzuständen vornehmen zu können, ist es vorteilhaft, wenn die Amplitudenwerte der Empfangssignale in einem Speicher der Auswerteeinheit gespeichert werden.

Zur Überprüfung des Lichtgitters ist vorteilhafterweise die Strahlleistung der Lichtsender variierbar und die dieser Variation entsprechenden Veränderungen der Empfangssignale wird von der Auswerteeinheit detektiert und ausgewertet.

Ein erfindungsgemäßes Sicherheitslichtgitter zur Durchführung des Verfahrens nach einem der vorhergehenden Ansprüche umfasst eine erste optische Einheit, die eine Reihe nebeneinander angeordneter Lichtsender und/oder Lichtempfänger aufweist und einer zweiten optischen Einheit, die den Lichtsendern bzw. Lichtempfängern der ersten Einheit zugeordnete ebenfalls nebeneinander angeordnete Lichtempfänger bzw. Lichtsender aufweist, wobei jeweils ein Lichtsender einem Lichtempfänger gegenüberliegend zugeordnet ist, so dass die Lichtstrahlen solch gebildeter Paare von Lichtsendern und Lichtempfängern ein Schutzfeld bilden, mit einer Empfangselektronik zur Verstärkung der Empfangssignale der Lichtempfänger und einer Auswerteeinheit, die die Empfangssignale auswertet und bei unzulässigem Objekteingriff in das Schutzfeld ein Sicherheitssignal ausgibt, wobei den Lichtsendern eine Ansteuereinheit zur Einstellung der Strahlleistung zugeordnet ist und die Empfangselektronik dazu ausgebildet ist, die Verstärkung der Empfangssignale so einzustellen, dass bei freiem Schutzfeld alle verstärkten Empfangssignale im nicht gesättigten Bereich der Empfangselektronik liegen.

Der Kommunikationskanal kann aus einer galvanischen oder einer drahtlosen Verbindung gebildet sein, wobei er in einer Ausführungsform aus einer optischen Verbindung zwischen den beiden Einheiten gebildet ist, wobei die optische Verbindung vorzugsweise durch eines der Paare von Lichtsender und Lichtempfänger gebildet ist. Dann sind keine separaten Vorrichtungen und Bauteile notwendig.

Im Folgenden wird die Erfindung anhand eines Ausführungsbeispiels unter Bezugnahme auf die Zeichnung im Einzelnen erläutert. In der Zeichnung zeigt:

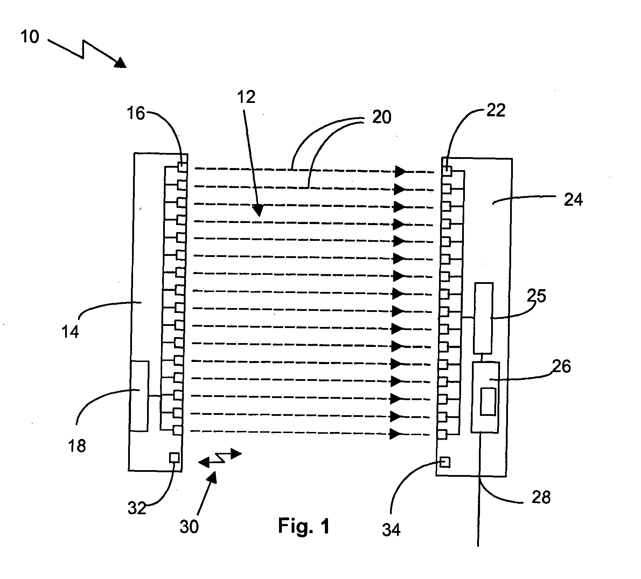

- Fig. 1: eine schematische Darstellung eines erfindungsgemäßen Lichtgitters.

Ein in Fig. 1 dargestelltes, erfindungsgemäßes Sicherheitslichtgitter 10 zur Überwachung eines Schutzfeldes 12 weist eine erste optische Einheit 14 auf, die eine Reihe nebeneinander angeordneter Lichtsender 16 enthält. Die Lichtsender 16 werden von einer Steuereinheit 18 angesteuert. Die Lichtsender 16 senden Lichtstrahlen 20 aus, die von zugeordneten Lichtempfängern 22 einer zweiten optischen Einheit 24 empfangen werden. Jeweils ein Lichtsender 16 und ein gegenüberliegender, zugeordneter Lichtempfänger 22 bilden ein Paar, so dass insgesamt eine Vielzahl solcher Paare, deren Lichtstrahlen 20 parallel verlaufen, gebildet sind, die das Schutzfeld 12 aufspannen. Die Lichtempfänger 22 liefern entsprechend des jeweils empfangenen Lichts Empfangssignale, die in einer Empfangselektronik 25 verstärkt und von einer Auswerteeinheit 26 ausgewertet werden. In Abhängigkeit der Empfangssignale wird bei unzulässigem Objekteingriff in das Schutzfeld 12, z.B. bei Unterbrechung einer der Lichtstrahlen 20, ein Sicherheitssignal an einem Ausgang 28 zur Verfügung gestellt. Das Sicherheitssignal kann beispielsweise ein Abschaltsignal für eine gefährliche Maschine sein.

In der in Fig. 1 dargestellten Ausführungsform sind der Einfachheit halber in der ersten optischen Einheit 14 ausschließlich Lichtsender 16 vorgesehen und in der zweiten optischen Einheit 24 ausschließlich Lichtempfänger 22. Es ist aber auch denkbar, dass jede optische Einheit sowohl Lichtsender als auch Lichtempfänger enthält. Dann müsste auch jede optische Einheit eine Steuereinheit, eine Empfängerelektronik und eine Auswerteeinheit enthalten.

Über die Steuereinheit 18 können die Lichtsender 16 derart angesteuert werden, dass die Intensität eines jeden Lichtstrahls 20 vorgebbar ist. Ähnlich ist die Empfangselektronik 25 ausgebildet, indem nämlich die Verstärkung der von den Lichtempfängern 22 gelieferten Empfangssignale für jeden Lichtempfänger 22 einstellbar ist. Die Einstellung der Verstärkung erfolgt derart, dass bei freiem Schutzfeld alle verstärkten Empfangssignale eine Amplitude haben, so dass die Empfangselektronik nicht in der Sättigung betrieben wird.

Über einen Kommunikationskanal 30 können die Steuereinheit 18 und die Empfangselektronik 25 miteinander kommunizieren, so dass die in der Empfangselektronik 25 verstärkten Empfangssignale die Empfangselektronik bei freiem Schutzfeld 12, also wenn die Sendelichtstrahlen 20 die Empfänger 22 ungehindert erreichen können, nicht in die Sättigung treiben. Der Kommunikationskanal umfasst Mittel 32 und 34, die in dem dargestellten Ausführungsbeispiel Sende-/Empfangseinheiten einer Funkverbindung sein können. Alternativ kann der Empfangskanal auch durch eine galvanische Verbindung gebildet sein oder sogar durch eine optische Verbindung, insbesondere durch eines der Sender-Empfänger-Paare selbst.

Der erfindungsgemäße Betrieb des Sicherheitslichtgitters 10 umfasst die folgenden Schritte:
Die von den Lichtsendern 16 ausgesandten Lichtstrahlen 20 werden von den Lichtempfängern 22 empfangen und die Lichtempfänger 22 erzeugen Empfangssignale, die in der Empfangselektronik 25 verstärkt werden, wobei die Verstärkung so begrenzt ist, dass bei freiem Schutzfeld 12 die Empfangselektronik nicht in die Sättigung getrieben ist. Dies kann entweder dadurch geschehen, dass die Lichtsender 16 entsprechend angesteuert werden oder die Empfangselektronik eine entsprechende Verstärkung einstellt. Dies kann je nach Betriebsart unterschiedlich sein, wobei zur Abstimmung zwischen Sender und Empfänger die Steuereinheit 18 mit der Empfangselektronik 25 über den Kommunikationskanal 30 kommunizieren kann. In der Auswerteeinheit 26 schließlich werden die verstärkten Empfangssignale ausgewertet. Die Auswertung umfasst die eingangs genannten Möglichkeiten und eine Auswertung auf Detektion eines unzulässigen Objekteingriffs, wobei dann das Sicherheitssignal ausgegeben wird, wenn die Amplitude wenigstens eines Empfangssignals in einem vorbestimmten Bereich liegt. Dies kann z.B. dann der Fall sein, wenn ein Lichtstrahl unterbrochen wurde.

## Patentansprüche

1. Verfahren zum Betreiben eines Sicherheitslichtgitters mit den Schritten:
- Aussenden von Lichtstrahlen (20) von Lichtsendern (16) einer ersten und/oder zweiten optischen Einheit (14),
- Empfangen der Lichtstrahlen (20) mit Lichtempfängern (22) der zweiten und/oder ersten optischen Einheit (14) und Erzeugen von Empfangssignalen, wobei jeweils ein Lichtsender (16) einem Lichtempfänger (22) gegenüberliegend zugeordnet ist, so dass die Lichtstrahlen (20) solch gebildeter Paare von Lichtsendern und Lichtempfängern ein Schutzfeld (12) bilden,
- Auswerten der Empfangssignale der Lichtempfänger (22),
- Erzeugen eines Sicherheitssignals bei unzulässigem Objekteingriff in das Schutzfeld (12),
- Ansteuern der Lichtsender (16) und/oder Verstärken der Empfangssignale der Lichtempfänger (22), so dass alle Empfangssignale bei freiem Schutzfeld (12) im nicht gesättigten Bereich der Empfangselektronik (25) liegen,
- Auswerten der Amplituden aller Empfangssignale
- und Ausgeben des Sicherheitssignals, wenn durch einen unzulässigen Objekteingriff wenigstens eine der Amplituden in einem bestimmten Bereich liegt
**gekennzeichnet durch** die weiteren Schritte:
- Ermitteln der Größe und des Ortes eines Objektes **durch** Bewertung und Vergleich der Intensitäten zweier Strahlen, die den Rand des im Schutzfeld befindlichen Objektes streifen.

2. Verfahren nach Anspruch 1, **dadurch gekennzeichnet, dass** die Senderleistung geregelt wird und die Empfangssignale mit fest eingestellter Verstärkung der Empfangselektronik verstärkt werden.

3. Verfahren nach einem der vorhergehenden Ansprüche, **dadurch gekennzeichnet, dass** die Verstärkung der Empfangselektronik eingestellt wird und die Senderleistung fest eingestellt ist, insbesondere auf maximale Leistung eingestellt ist.

4. Verfahren nach einem der vorhergehenden Ansprüche, **dadurch gekennzeichnet, dass** über einen Kommunikationskanal die Senderansteuerung mit der Verstärkungseinstellung der Empfangselektronik kommunizieren kann.

5. Verfahren nach einem der vorhergehenden Ansprüche, **dadurch gekennzeichnet, dass** die Strahlleistung für jeden Lichtsender einzeln einstellbar ist.

6. Verfahren nach einem der vorhergehenden Ansprüche, **dadurch gekennzeichnet, dass** die Amplitudenwerte der Empfangssignale in einem Speicher der Auswerteeinheit gespeichert werden.

7. Verfahren nach einem der vorhergehenden Ansprüche, **dadurch gekennzeichnet, dass** zur Überprüfung des Lichtgitters die Strahlleistung der Lichtsender variiert wird und die dieser Variation entsprechenden Veränderungen der Empfangssignale von der Auswerteeinheit detektiert und ausgewertet werden.

8. Sicherheitslichtgitter zur Durchführung des Verfahrens nach einem der vorhergehenden Ansprüche, mit einer ersten optischen Einheit (14), die eine Reihe nebeneinander angeordneter Lichtsender (16) und/oder Lichtempfänger aufweist und einer zweiten optischen Einheit (24), die den Lichtsendern (16) bzw. Lichtempfängern der ersten Einheit (14) zugeordnete ebenfalls nebeneinander angeordnete Lichtempfänger (22) bzw. Lichtsender aufweist, wobei jeweils ein Lichtsender einem Lichtempfänger gegenüberliegend zugeordnet ist, so dass die Lichtstrahlen solch gebildeter Paare von Lichtsendern und Lichtempfängern ein Schutzfeld (12) bilden, mit einer Empfangselektronik zur Verstärkung der Empfangssignale der Lichtempfänger und einer Auswerteeinheit (26), die die Empfangssignale auswertet und bei unzulässigem Objekteingriff in das Schutzfeld ein Sicherheitssignal ausgibt, wobei den Lichtsendern eine Ansteuereinheit zur Einstellung der Strahlleistung zugeordnet ist und die Empfangselektronik dazu ausgebildet ist, die Verstärkung der Empfangssignale so einzustellen, dass bei freiem Schutzfeld alle verstärkten Empfangssignale im nicht gesättigten Bereich der Empfangselektronik liegen, **dadurch gekennzeichnet, dass** die Auswerteeinheit so ausgebildet ist, dass durch Bewertung und Vergleich der Intensitäten zweier Strahlen, die den Rand eines im Schutzfeld befindlichen Objektes streifen, auf die Größe und den Ort des Objektes im Schutzfeld geschlossen werden kann.

9. Lichtgitter nach Anspruch 8, **dadurch gekennzeichnet, dass** ein Kommunikationskanal vorgesehen ist, so dass die Senderansteuerung mit der Verstärkungseinstellung der Empfangselektronik kommunizieren kann.

10. Lichtgitter nach Anspruch 9, **dadurch gekennzeichnet, dass** der Kommunikationskanal aus einer galvanischen oder einer drahtlosen Verbindung gebildet ist.

11. Lichtgitter nach Anspruch 10, **dadurch gekennzeichnet, dass** der Kommunikationskanal aus einer optischen Verbindung zwischen den beiden Einheiten gebildet ist, wobei die optische Verbindung vorzugsweise durch eines der Paare von Lichtsender und Lichtempfänger gebildet ist.

## Claims

1. A method for operating a safety light grid having the steps of:
- transmission of lights beams (20) from light transmitters (16) of a first optical unit and/or of second optical unit (14),
- reception of the light beams (20) by using light receivers (22) of the second optical unit and/or of the first optical unit (14) and generation of received signals, wherein a light transmitter (16) is respectively associated with an oppositely disposed light receiver (22) so that the light beams (20) of so formed pairs of light transmitters and light receivers form a protective field (12),
- evaluation of the received signals of the light receivers (22),
- generation of a safety signal on an unallowed object intrusion into the protective field (12),
- control of the light transmitters (16) and/or amplification of the received signals of the light receivers (22) so that all received signals lie in the non-saturated region of the receiving electronics (25) for a free protective field (12),
- evaluation of amplitudes of all received signals
- and output of the safety signal when at least one of the amplitudes lies in a certain region due to an unallowed object intrusion,
**characterized by** the following further steps:
- determination of the size and the position of an object by evaluating and comparing the intensities of two beams which strike the edge of the object present in the protective field.

2. A method in accordance with claim 1, wherein the transmitter power is regulated and the received signals are amplified with fixedly set amplification of the receiving electronics.

3. A method in accordance with claim 1, wherein the amplification of the receiving electronics is set and the transmitter power is fixedly set, in particular to maximum power.

4. A method in accordance with claim 1, wherein the transmitter control can communicate with the amplification setting of the receiving electronics via a communication channel.

5. A method in accordance with claim 1, wherein the beam power for each light transmitter is individually settable.

6. A method in accordance with claim 1, wherein the amplitude values of the received signals are stored in a memory of the evaluation unit.

7. A method in accordance with claim 1, wherein the beam power of the light transmitters is varied for monitoring the light grid and the changes corresponding to this variation of the received signals are detected and evaluated by the evaluation unit.

8. A safety light grid for carrying out a method according to one of the preceding claims, said safety light grid having a first optical unit (14) which has a series of light transmitters (16) and/or light receivers arranged next to one another and having a second optical unit (24) which likewise has a series of light receivers (22) and/or light transmitters arranged next to one another and associated with the light transmitters (16) and/or the light receivers of the first unit (14), wherein a light transmitter is respectively associated with an oppositely disposed light receiver so that the light beams of so formed pairs of light transmitters and light receivers form a protective field, having a receiving electronics for amplifying the received signals of the light receivers and an evaluation unit (26) which evaluates the received signals and on an unallowed object intrusion into the protective field outputs a safety signal, wherein a control unit for the setting of the beam power is associated with the light transmitters and the receiving electronics is designed to set the amplification of the received signals so that all of the amplified received signals of the receiving electronics lie in the non-saturated region for a free protective field, **characterized in that** the evaluation unit is desinged so that the size and the position of an object in the protective field can be determined by evaluating and comparing the intensities of two beams which strike the edge of the object present in the protective field.

9. A light grid in accordance with claim 8, wherein a communication channel is provided so that the transmitter control can communicate with the amplification setting of the receiving electronics.

10. A light grid in accordance with claim 9, wherein the communication channel is formed from a galvanic connection or a wireless connection.

11. A light grid in accordance with claim 10, wherein the communication channel is formed by an optical connection between the two units, wherein the optical connection is preferably formed by a pair of light transmitters and light receivers.

## Revendications

1. Procédé pour le fonctionnement d'une barrière lumineuse de sécurité, comprenant les étapes consistant à :
- émettre des rayons lumineux (20) depuis des émetteurs de lumière (16) d'une première unité optique et/ou d'une seconde unité optique (14),
- recevoir les rayons lumineux (20) avec des récepteurs de lumière (22) de la seconde unité optique et/ou de la première unité optique (14) et générer des signaux de réception, de manière qu'un émetteur de lumière (16) est respectivement associé à un récepteur de lumière (22) opposé, de sorte que les rayons lumineux (20) de paires ainsi formées d'émetteurs de lumière et de récepteurs de lumière forment un champ de protection (12),
- évaluer des signaux de réception des récepteurs de lumière (22),
- engendrer un signal de sécurité en cas d'intervention inadmissible d'un objet dans le champ de protection (12),
- piloter les émetteurs de lumière (16) et/ou amplifier les signaux de réception des récepteurs de lumière (22) de sorte que tous les signaux de réception, lorsque le champ de protection (12) est libre, soient situés dans la zone non saturée du système électronique de réception (25),
- évaluer les amplitudes de tous les signaux de réception,
- et émettre le signal de sécurité lorsque, du fait d'une intervention inadmissible d'un objet, l'une au moins des amplitudes tombe dans une plage déterminée,
**caractérisé par** les autres étapes consistant à :
- déterminer la taille et le lieu d'un objet par évaluation et comparaison des intensités de deux rayons qui sont tangents à la bordure de l'objet se trouvant dans le champ de protection.

2. Procédé selon la revendication 1, **caractérisé en ce que** la puissance d'émission est régulée, et les signaux de réception sont amplifiés avec une amplification réglée de manière fixe dans le système électronique de réception.

3. Procédé selon l'une des revendications précédentes, **caractérisé en ce que** l'amplification du système électronique de réception est réglée et la puissance d'émission est réglée de manière fixe, et en particulier réglée à la puissance maximum.

4. Procédé selon l'une des revendications précédentes, **caractérisé en ce que** le pilotage de l'émission est capable de communiquer avec le réglage de l'amplification du système électronique de réception via un canal de communication.

5. Procédé selon l'une des revendications précédentes, **caractérisé en ce que** la puissance du rayonnement est susceptible d'être réglée individuellement pour chaque émetteur de lumière.

6. Procédé selon l'une des revendications précédentes, **caractérisé en ce que** les valeurs d'amplitude des signaux de réception sont mémorisées dans une mémoire de l'unité d'évaluation.

7. Procédé selon l'une des revendications précédentes, **caractérisé en ce que**, pour contrôler la barrière lumineuse, la puissance du rayonnement des émetteurs de lumière est variée et les modifications des signaux de réception correspondant à cette variation sont détectées et évaluées par l'unité d'évaluation.

8. Barrière lumineuse de sécurité pour mettre en oeuvre le procédé selon l'une des revendications précédentes, comprenant une première unité optique (14) qui comporte une rangée d'émetteurs de lumière (16) et/ou de récepteurs de lumière agencés les uns à côté des autres, et une seconde unité optique (24) qui comporte des récepteurs de lumière (22) ou respectivement des émetteurs de lumière également agencés les uns à côté des autres et correspondant aux émetteurs de lumière (16) ou aux récepteurs de lumière de la première unité (14), de telle manière qu'un émetteur de lumière est respectivement associé à un récepteur de lumière opposé, de sorte que les rayons de lumière de paires ainsi formées d'émetteurs de lumière et de récepteurs de lumière forment un champ de protection (12), comprenant un système électronique de réception pour amplifier les signaux de réception des récepteurs de lumière et une unité d'évaluation (26) qui évalue les signaux de réception et qui, lors d'une intervention inadmissible d'un objet dans le champ de protection, émet un signal de sécurité, dans lequel une unité de pilotage est associée aux émetteurs de lumière pour régler la puissance du rayonnement et le système électronique de réception est réalisé pour régler l'amplification des signaux de réception de telle façon que, lorsque le champ de protection est libre, tous les signaux de réception amplifiés soient situés dans la zone non saturée du système électronique de réception, **caractérisée en ce que** l'unité d'évaluation est ainsi réalisée que par évaluation et comparaison des intensités de deux rayons qui sont tangents à la bordure d'un objet se trouvant dans le champ de protection, il est possible de conclure quant à la taille et à l'emplacement de l'objet dans le champ de protection.

9. Barrière lumineuse selon la revendication 8, **caractérisée en ce qu'**il est prévu un canal de communication de telle façon que le pilotage des émetteurs est capable de communiquer avec le réglage d'amplification du système électronique de réception.

10. Barrière lumineuse selon la revendication 9, **caractérisée en ce que** le canal de communication est formé par une liaison filaire ou par une liaison sans fil.

11. Barrière lumineuse selon la revendication 10, **caractérisée en ce que** le canal de communication est formé par une liaison optique entre les deux unités, et ladite liaison optique est de préférence formée par l'une des paires d'émetteurs de lumière et de récepteurs de lumière.
